# EUROPEAN PATENT SPECIFICATION

(11) **EP 3 136 665 B1**
(45) Date of publication and mention of the grant of the patent: **13.06.2018**
(21) Application number: 15782838.5
(22) Date of filing: 22.04.2015
(51) Int. Cl.: H04L 12/863, H04W 4/00, H04W 28/06

(54) **METHOD FOR PROCESSING DATA PACKET OF RLC LAYER AND RLC ENTITY**
VERFAHREN ZUR VERARBEITUNG EINES DATENPAKETS IN DER RLC-SCHICHT UND RLC-EINHEIT
PROCÉDÉ DE TRAITEMENT DE PAQUET DE DONNÉES DE COUCHE RLC, ET ENTITÉ RLC

(30) Priority: 23.04.2014 CN 201410165653
(43) Date of publication of application: 01.03.2017
(73) Proprietor: China Academy of Telecommunications Technology, Haidian District Beijing 100191 (CN)
(72) Inventor: ZHANG, Huiying, Beijing 100191 (CN); ZHAO, Yali, Beijing 100191 (CN)
(74) Representative: Nony
(86) International application number: PCT/CN2015/077161
(87) International publication number: WO 2015/161791

(56) References cited:
- WO-A2-2008/097544
- CN-A- 101 330 443
- US-A1- 2011 051 664
- "Universal Mobile Telecommunications System (UMTS); Radio Link Control (RLC) protocol specification (3GPP TS 25.322 version 11.2.0 Release 11)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP RAN 2, no. V11.2.0, 1 April 2013 (2013-04-01), XP014156473,
- 'Technical Specification Group Radio Access Network; Evolved Universal Terrestrial Radio Access (E-UTRA); Radio Link Control (RLC) protocol specification (Release 11' 3GPP TS 36.322 V11.0.0 30 September 2012, XP014075780
- 'Technical Specification Group Radio Access Network; Radio Link Control (RLC) protocol specification (Release 11' 3GPP TS 25.322 V11.2.0 31 March 2013, XP014156473

## Description

### Field

The present invention relates to the field of communications, and particularly to a method for processing a data packet at the RLC layer, and an RLC entity, in Device to Device (D2D) communication.

### Background

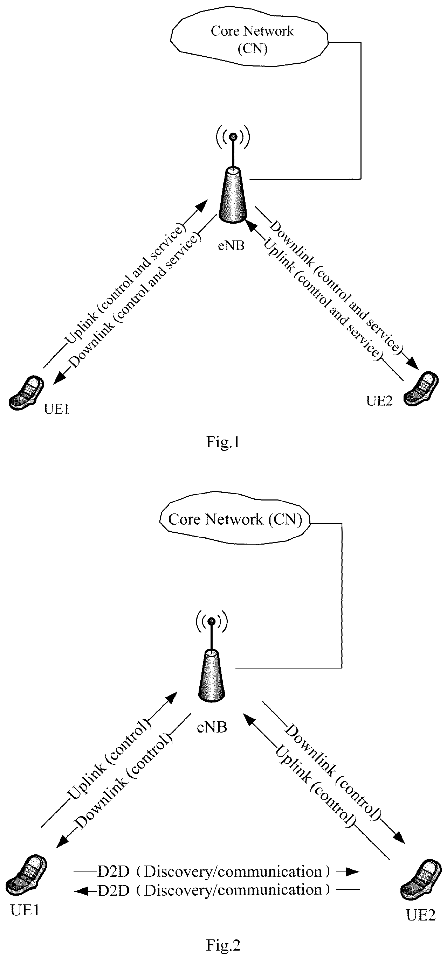

In a Long Term Evolution (LTE) system, communication between communication devices are controlled centrally by a network, that is, both uplink and downlink data of User Equipments (UEs) are controlled by the network to be transmitted and received. Communication between one UE and another UE is forwarded and controlled by the network without any direct communication link between the UE and the other UE, and in this mode, data transmission between the UEs and the network can be referred simply to as Device to Network (D2N) transmission in the network architecture as illustrated in Fig.1.

Protocol layers of an LTE radio interface include the physical layer, the data link layer, and the Radio Resource Control (RRC) layer, and the data link layer further includes the Media Access Control (MAC) RLC layer and the Packet Data Convergence Protocol (PDCP) layer. Functions of the RLC layer are performed by an RLC entity. If an evolved Node B (eNB) is configured with an RLC entity, then there will be a peer RLC entity configured at the UE side, and vice versa. The RLC entity can transmit data in a Transparent Mode (TM), an Un-acknowledged Mode (UM), or an Acknowledged Mode (AM).

The UM RLC entity can be configured as a transmitting UM RLC entity or a receiving UM RLC entity. The transmitting UM RLC entity receives an RLC SDU from a higher layer, and transmits an RLC PDU to a peer receiving UM RLC entity through a lower layer. The receiving UM RLC entity receives an RLC PDU from a peer UM RLC entity through a lower layer, where each receiving UM RLC entity maintains the following state variables:

VR (UH): UM highest received state variable; this state variable holds the value of the SN following the SN of the UMD PDU with the highest SN among received UMD PDUs, and it serves as an upper boundary of a reordering window. A next Serial Number (SN) to the largest SN in a currently received data packets is stored as an upper boundary of a reordering window, and the reordering window is defined as (VR (UH) - UM_Window_Size) ≤ SN < VR (UH), where UM_Window_Size represents the size of the reordering window determined by the received largest SN, and VR (UH) is initially 0.

VR (UX): UM t-Reordering state variable. This state variable holds the value of the SN following the SN of the UMD PDU which triggered t-Reordering. VR (UX) is the SN of a UMD PDU triggering a reordering timer (T-Reordering) to be started, and the value of which is the value of VR (UH) when T-Reordering is started.

VR (UR): UM receiving state variable. This state variable holds the value of the SN of the earliest UMD PDU that is still considered for reordering. VR(UR) is the smallest SN among UMD PDUs to be reordered. If VR (UX) ≤ VR (UR), then it will indicate that the states of all the UMD PDUs with their receive states to be determined have been determined so that they will not be reordered, and at this time T-Reordering will be stopped; and if VR (UH) > VR (UR), then T-Reordering will be started, and VR (UX) will be reset to VR (UH). VR (UR) is initially 0.

In order to better satisfy a user demand, and to improve the efficiency of exchanging information between devices, the mechanisms of Device to Device (D2D) discovery and Device to Device (D2D) communication have been introduced to the mobile communication system, where:

In the D2D discovery mechanism, a UE determines another UE proximate thereto using an Evolved Universal Mobile Telecommunication System (UMTS) Terrestrial Radio Access (E-UTRA). For example, a D2D UE can seek for a taxi, a friend, etc., proximate thereto using this service.

In the D2D communication mechanism, a link is set up directly between two UEs proximate to each other (as illustrated in Fig.2) so that the communication link originally transmitted over the network is translated into the local direct communication link to thereby save a significant bandwidth and improve the efficiency of the network; or two UEs proximate to each other can be provided with a stable communication service at a high speed and a low cost by communicating over a direct link. Proximity service communication is typically conducted under the control of or assistance by the network side. The eNB may even allocate resources dynamically for the UEs in proximity service communication.

In the D2D communication system, after a transmitter transmits D2D data, the receiver may not receive the D2D data starting with a data packet with SN=0, that is, there is no fixed starting point of D2D communication, so that if the RLC protocol in D2D communication is applied between two D2D UEs, that is, both VR (UH) and VR (UR) are initially 0, then it will be very likely for the SN of some data packet received at the RLC layer of the receiver to have fallen out of the reordering window, thereby resulting in loss of the packet.

WO 2008097544A2 discloses the following: Enhancements are provided for the radio link control (RLC) protocol in wireless communication systems where variable RLC packet data unit (PDU) size is allowed. When flexible RLC PDU sizes are configured by upper layers, radio network controller (RNC)/Node B flow control, RLC flow control, status reporting and polling mechanisms are configured to use byte count based metrics in order to prevent possible buffer underflows in the Node B and buffer overflows in the RNC. The enhancements proposed herein for the RLC apply to both uplink and downlink communications.

### Summary

Embodiments of the invention provide a method for processing a data packet at the RLC layer, and an RLC entity, where initial values of the VR (UH) state variable and the VR (UR) state variable are set reasonably so that all the data packets received by the RLC entity can lie in a receiving window, thus avoiding some data packet from being discarded by mistake.

An embodiment of the invention provides a method for processing a data packet at the RLC layer, the method including:
setting, by an RLC entity, initial values for a VR (UH) state variable and a VR (UR) state variable of the RLC layer according to the SN of a received first data packet; and
processing, by the RLC entity, a currently received data packet according to the SN of the currently received data packet, and the current values of the VR (UH) state variable and the VR (UR) state variable, and updating the current values of the VR (UH) state variable and the VR (UR) state variable.

In an implementation, in a first preferred implementation, setting, by the RLC entity, the initial values for the VR (UH) state variable and the VR (UR) state variable of the RLC layer according to the SN of the received first data packet includes:
determining, by the RLC entity, the SN of the first data packet, and setting the initial values of the VR (UH) state variable and the VR (UR) state variable to the SN of the first data packet, upon reception of the first data packet.

In an implementation, in a second preferred implementation, setting, by the RLC entity, the initial values for the VR (UH) state variable and the VR (UR) state variable of the RLC layer according to the SN of the received first data packet includes:
determining, by the RLC entity, the SN of the first data packet, and setting the initial value of the VR (UH) state variable to the SN of the first data packet, and the initial value of the VR (UR) state variable to the difference between the initial value of the VR (UH) state variable, and a preset reordering window size, upon reception of the first data packet.

Preferably if the difference between the initial value of the VR (UH) state variable, and the preset reordering window size is less than zero, then setting, by the RLC entity, the initial value for the VR (UR) state variable includes:
setting, by the RLC entity, the initial value of the VR (UR) state variable to a value as a result of a MOD operation on the difference between the initial value of the VR (UR) state variable, and the preset reordering window size.

Preferably if the preconfigured length of an SN is 5 bits, then the RLC entity will set the initial value of the VR (UR) state variable to a value as a result of a MOD-32 operation on the difference between the initial value of the VR (UH) state variable, and the preset reordering window size; and
if the preconfigured length of an SN is 10 bits, then the RLC entity will set the initial value of the VR (UR) state variable to a value as a result of a MOD-1024 operation on the difference between the initial value of the VR (UH) state variable, and the preset reordering window size.

An embodiment of the invention provides an RLC entity including:
a setting module configured to set initial values for a VR (UH) state variable and a VR (UR) state variable of the RLC layer according to the SN of a received first data packet; and
a processing module configured to process a currently received data packet according to the SN of the currently received data packet, and the current values of the VR (UH) state variable and the VR (UR) state variable configured at the RLC layer, and to update the current values of the VR (UH) state variable and the VR (UR) state variable.

In an implementation, in a first preferred implementation, the setting module is configured:
to determine the SN of the first data packet, and to set the initial values of the VR (UH) state variable and the VR (UR) state variable to the SN of the first data packet, upon reception of the first data packet.

In an implementation, in a second preferred implementation, the setting module is configured:
to determine the SN of the first data packet, and to set the initial value of the VR (UH) state variable to the SN of the first data packet, and the initial value of the VR (UR) state variable to the difference between the initial value of the VR (UH) state variable, and the preset reordering window size, upon reception of the first data packet.

Preferably if the difference between the initial value of the VR (UH) state variable, and the preset reordering window size is less than zero, then the setting module configured to set the initial value for the VR (UR) state variable is configured:
to set the initial value of the VR (UR) state variable to a value as a result of a MOD operation on the difference between the initial value of the VR (UH) state variable, and the preset reordering window size.

Preferably if the preconfigured length of an SN is 5 bits, then the setting module is configured to set the initial value of the VR (UR) state variable to a value as a result of a MOD-32 operation on the difference between the initial value of the VR (UH) state variable, and the preset reordering window size; and
if the preconfigured length of an SN is 10 bits, then the setting module is configured to set the initial value of the VR (UR) state variable to a value as a result of a MOD-1024 operation on the difference between the initial value of the VR (UH) state variable, and the preset reordering window size.

An embodiment of the invention provides another RLC entity including a transceiver, and at least one processor connected with the transceiver, wherein:
the transceiver is configured to receive data packets transmitted by a transmitter, and to submit the data packets processed by the processor to a higher layer; and
the processor is configured to set initial values for a VR (UH) state variable and a VR (UR) state variable of the RLC layer according to the SN of a received first data packet; and to process a currently received data packet according to the SN of the currently received data packet, and the current values of the VR (UH) state variable and the VR (UR) state variable configured at the RLC layer, and to update the current values of the VR (UH) state variable and the VR (UR) state variable.

In an implementation, in a first preferred implementation, the processor is configured to set the initial values of the VR (UH) state variable and the VR (UR) state variable to the SN of the first data packet, after the transceiver receives the first data packet.

In an implementation, in a second preferred implementation, the processor is configured to set the initial value of the VR (UH) state variable to the SN of the first data packet, and the initial value of the VR (UR) state variable to the difference between the initial value of the VR (UH) state variable, and a preset reordering window size, after the transceiver receives the first data packet.

Preferably if the difference between the initial value of the VR (UH) state variable, and the preset reordering window size is less than zero, then the processor is configured:
to set the initial value of the VR (UR) state variable to a value as a result of a MOD operation on the difference between the initial value of the VR (UH) state variable, and the preset reordering window size.

Preferably if the preconfigured length of an SN is 5 bits, then the processor is configured to set the initial value of the VR (UR) state variable to a value as a result of a MOD-32 operation on the difference between the initial value of the VR (UH) state variable, and the preset reordering window size; and
if the preconfigured length of an SN is 10 bits, then the processor is configured to set the initial value of the VR (UR) state variable to a value as a result of a MOD-1024 operation on the difference between the initial value of the VR (UH) state variable, and the preset reordering window size.

In the method and the RLC entity according to the embodiments of the invention, the RLC entity sets the initial values for the VR (UH) state variable and the VR (UR) state variable of the RLC layer according to the SN of the received first data packet; and the RLC entity processes the currently received data packet according to the SN of the currently received data packet, and the current values of the VR (UH) state variable and the VR (UR) state variable, and updates the current values of the VR (UH) state variable and the VR (UR) state variable. The RLC entity sets the initial values for the VR (UH) state variable and the VR (UR) state variable of the RLC layer according to the SN of the received first data packet so that all the data packets received by the RLC entity can lie in a receiving window, thus avoiding some data packet from being discarded by mistake.

### Brief Description of the Drawings

Fig.1 is an architectural diagram of D2N communication in the prior art;
Fig.2 is an architectural diagram of D2D communication in the prior art;
Fig.3 is a schematic flow chart of a method for processing a data packet at the RLC layer according to an embodiment of the invention;
Fig.4 is a schematic diagram of an RLC entity according to an embodiment of the invention; and
Fig.5 is a schematic diagram of another RLC entity according to an embodiment of the invention.

### Detailed Description of the Embodiments

In the invention, initial values of the VR (UH) state variable and the VR (UR) state variable are set reasonably so that all the data packets received by an RLC entity can lie in a receiving window, thus avoiding some data packet from being discarded by mistake.

The embodiments of the invention will be described below in further details with reference to the drawings. It shall be appreciated that the embodiments described here are merely intended to illustrate and explain the invention, but not to limit the invention.

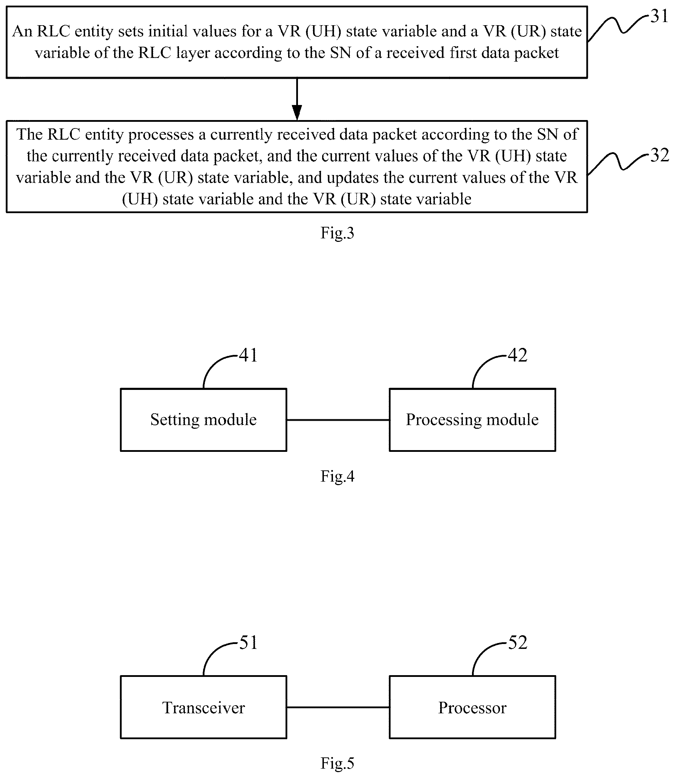

As illustrated in Fig.3, an embodiment of the invention provides a method for processing a data packet at the RLC layer, where the method includes:

In the step 31, an RLC entity sets initial values for a VR (UH) state variable and a VR (UR) state variable of the RLC layer according to the SN of a received first data packet.

In the step 32, the RLC entity processes a currently received data packet according to the SN of the currently received data packet, and the current values of the VR (UH) state variable and the VR (UR) state variable, and updates the current values of the VR (UH) state variable and the VR (UR) state variable.

In the embodiment of the invention, the RLC entity sets the initial values for the VR (UH) state variable and the VR (UR) state variable of the RLC layer according to the SN of the received first data packet; and the RLC entity processes the currently received data packet according to the SN of the currently received data packet, and the current values of the VR (UH) state variable and the VR (UR) state variable, and updates the current values of the VR (UH) state variable and the VR (UR) state variable. The RLC entity sets the initial values for the VR (UH) state variable and the VR (UR) state variable of the RLC layer according to the SN of the received first data packet so that all the data packets received by the RLC entity can lie in a receiving window, thus avoiding some data packet from being discarded by mistake.

The embodiment of the invention is applicable to D2D communication; and since a receiver in D2D communication may not receive data starting with a first data packet transmitted by a transmitter (i.e., a data packet with SN=0) so that there is no fixed starting point of D2D communication, in order to avoid the receiver from discarding by mistake some data packet, the initial values for the VR (UH) state variable and the VR (UR) state variable of the RLC layer are set according to the SN of the received first data packet so that all the data packets received by the RLC entity can lie in a receiving window. Of course, the embodiment of the invention can also be applicable to another communication system in which a transmitter transmits data and a receiver receives data asynchronously.

In an implementation, the initial values of the VR (UH) state variable and the VR (UR) state variable are set in the following two preferred implementations:
In a first implementation, both of the initial values of the VR (UH) state variable and the VR (UR) state variable are set to the SN of the first data packet.

In this implementation, particularly in the step 31, the RLC entity determines the SN of the first data packet, and sets the initial values of the VR (UH) state variable and the VR (UR) state variable to the SN of the first data packet, upon reception of the first data packet.

In this implementation, the step 32 is further performed in the following three approaches:
I. If the SN of the currently received data packet is equal to the current value of the VR (UH) state variable, then the RLC entity will submit the currently received data packet to a higher layer, and updates the current values of the VR (UH) state variable and the VR (UR) state variable.
II. If the SN of the currently received data packet is more than the difference between the current value of the VR (UH) state variable, and a preset reordering window size, and less than the current value of the VR (UR) state variable, then the RLC entity will discard the currently received data packet, updates the current value of the VR (UH) state variable, and maintains the current value of the VR (UR) state variable.
   In this approach, the preset reordering window size is dependent upon the length of the serial number of a data packet and is a half of the length of the serial number of a data packet. Particularly if the length of a serial number is configured as 5 bits, then the reordering window size will be 16; and if the length of a serial number is configured as 10 bits, then the reordering window size will be 512.
   In this approach, if the difference between the current value of the VR (UH) state variable, and the preset reordering window size is less than zero, then the SN of the currently received data packet will be compared with a result of a MOD operation on the difference. Particularly if the length of a serial number is configured as 5 bits, then a MOD-32 operation will be performed on the difference; and if the length of a serial number is configured as 10 bits, then the a MOD-1024 operation will be performed on the difference.
III. If the SN of the currently received data packet is more than the current value of the VR (UH) state variable, then the RLC entity will buffer the currently received data packet, start a reordering timer (T-Reordering), update the current value of the VR (UH) state variable, and maintain the current value of the VR (UR) state variable; and
   While the reordering timer is counting, the RLC entity buffers the currently received data packet, updates the current value of the VR (UH) state variable, and maintains the current value of the VR (UR) state variable, until the SN of the data packet is equal to the current value of the VR (UR) state variable, or the reordering timer expires, and the RLC entity reorders and submits the buffered data packets to the higher layer, stops the reordering timer, and updates the current values of the VR (UH) state variable and the VR (UR) state variable, where the updated current value of the VR (UH) state variable is the same with the updated current value of the VR (UR) state variable.

The first preferred implementation will be described below in details in connection with a particular embodiment thereof.

In a first embodiment, for example, the length of an SN is 10 bits, that is, the SN ranges from 0 to 1023. If the SNs of data packets received by the RLC entity are 600, 601, 599, 603, 604, and 602 in that order, then the received data packets will be processed as follows in this embodiment:
1. The RLC entity receives the first RLC data packet with the SN of 600, and at this time, the RLC entity sets the initial values of the VR (UH) state variable (simply referred to as VR (UH)) and the VR (UR) state variable (simply referred to as VR (UR)) to 600, and the RLC entity submits the data packet with the SN of 600 to the higher layer, and updates VR (UH) and VR (UR), that is, sets the value of VR (UH) and VR (UR) to 601.
2. The RLC entity receives the second data packet with the SN of 601, and since the SN is equal to the current value of the VR (UH) state variable, the RLC entity submits the data packet with the SN of 601 to the higher layer, and updates the VR (UH) state variable and the VR (UR) state variable, that is, sets the value of VR (UH) and VR (UR) to 602.
3. The RLC entity receives the third data packet with the SN of 599, and since (VR (UH) - UM_Window_Size) ≤ SN < VR (UR), the RLC entity discards the data packet.
4. The RLC entity receives the fourth data packet with the SN of 603, and since SN > VR (UH), the RLC entity puts the data packet with the SN of 603 into a buffer, updates VR (UH), that is, sets the value of VR (UH) to 604, and maintains the value of VR (UR) (where VR (UR) is still 602); and the RLC entity starts T-Reordering, and sets the value of VR (UX) to the value of VR (UH), that is, VR (UX) = 604.
5. The RLC entity receives the fifth data packet with the SN of 604, and since SN = VR (UH), the RLC entity updates VR (UH), that is, sets the value of VR (UH) to 605, maintains the value of VR (UR) (where VR (UR) is still 602), and puts the data packet with the SN of 604 into the buffer.
6. The RLC entity receives the sixth data packet with the SN of 602, and since SN = VR (UR), the RLC entity updates VR (UR), that is, sets the value of VR (UR) to 605, and submits the data packets with the SNs of 602, 603, and 604 to the higher layer; and at this time, since VR (UX) <= VR (UR), the RLC entity stops T-Reordering, and since VR (UR) = VR (UH), the RLC entity does not restart T-Reordering.

In a second implementation, the initial value of the VR (UH) state variable is set to the SN of the first data packet, and the initial value of the VR (UR) state variable is set to the difference between the initial value of the VR (UH) state variable, and the preset reordering window size.

In this implementation, particularly in the step 31, the RLC entity determines the SN of the first data packet, and sets the initial value of the VR (UH) state variable to the SN of the first data packet, and the initial value of the VR (UR) state variable to the difference between the initial value of the VR (UH) state variable, and the preset reordering window size, upon reception of the first data packet.

In this implementation, if the difference between the initial value of the VR (UR) state variable, and the preset reordering window size is less than zero, then the RLC entity will set the initial value for the VR (UR) state variable as follows:
The RLC entity sets the initial value of the VR (UR) state variable to a value as a result of a MOD operation on the difference between the initial value of the VR (UR) state variable, and the preset reordering window size.

Particularly if the preconfigured length of an SN is 5 bits, then the RLC entity will set the initial value of the VR (UR) state variable to a value as a result of a MOD-32 operation on the difference between the initial value of the VR (UH) state variable, and the preset reordering window size; and
If the preconfigured length of an SN is 10 bits, then the RLC entity will set the initial value of the VR (UR) state variable to a value as a result of a MOD-1024 operation on the difference between the initial value of the VR (UH) state variable, and the preset reordering window size.

In this implementation, particularly in the step 32, the RLC entity buffers the first data packet, starts the reordering timer, and updates the current values of the VR (UH) state variable and the VR (UR) state variable, upon reception of the first data packet.

While the reordering timer is counting, the RLC entity processes the currently received data packet according to the SN of the currently received data packet, and the current values of the VR (UH) state variable and the VR (UR) state variable.

Furthermore while the reordering timer is counting, the RLC entity processes the currently received data packet according to the SN of the currently received data packet, and the current values of the VR (UH) state variable and the VR (UR) state variable in the following several approaches:
I. If the SN of the currently received data packet is less than the current value of the VR (UR) state variable, then the RLC entity will discard the received first data packet, and update the current values of the VR (UH) state variable and the VR (UR) state variable.
II. If the SN of the currently received data packet is equal to the current value of the VR (UH) state variable, then the RLC entity will buffer the currently received data packet, and update the current values of the VR (UH) state variable and the VR (UR) state variable.
III. If the SN of the currently received data packet is more than the current value of the VR (UR) state variable, and less than the current value of the VR (UH) state variable, then the RLC entity will buffer the currently received data packet, update the current value of the VR (UH) state variable, and maintain the current value of the VR (UR) state variable.
IV. If the SN of the currently received data packet is equal to the VR (UR) state variable, then the RLC entity will buffer the currently received data packet, stop the reordering timer, reorder and submit the buffered data packets to the higher layer, update the current value of the VR (UH) state variable, and set the current value of the VR (UR) state variable the same with the current value of the VR (UH) state variable. Thereafter the RLC entity processes subsequently received data packets as in approach I.

In this implementation, particularly in the step 32, if the reordering timer expires, then the RLC entity will stop the reordering timer, reorder and submit the buffered data packets to the higher layer, update the current value of the VR (UH) state variable, and sets the current value of the VR (UR) state variable the same with the current value of the VR (UH) state variable.

The second preferred implementation will be described below in details in connection with a particular embodiment thereof.

In a second embodiment, for example, the length of an SN is 10 bits, that is, the SN ranges from 0 to 1023. If the SNs of data packets received by the RLC entity are 600, 601, 599, 603, 604, and 602 in that order, then the received data packets will be processed as follows in this embodiment:
1. The RLC entity receives the first RLC data packet with the SN of 600, and sets the initial value of VR (UH) to 600, and the initial value of VR (UR) to 600-512=88. The RLC entity puts the data packet with the SN of 600 into a buffer, and sets the value of VR (UH) to 601, and the value of VR (UR) to 89; and the RLC entity sets VR (UX) = VR (UH) = 601, and starts T-Reordering.
2. The RLC entity receives the second data packet with the SN of 601, and since SN = VR (UH), the RLC entity puts the data packet with the SN of 601 into the buffer, sets the value of VR (UH) to 602, and the value of VR (UR) to 90, and maintains the value of VR (UX).
3. The RLC entity receives the third data packet with the SN of 599, and since VR (UR) < SN < VR (UH), the RLC entity puts the data packet with the SN of 599 into the buffer, and maintains the value of VR (UH), the value of VR (UR), and the value of VR (UX).
4. The RLC entity receives the fourth data packet with the SN of 603, and since SN > VR (UH), the RLC entity puts the data packet with the SN of 603 into the buffer, sets the value of VR (UH) to 604, and the value of VR (UR) to 92, and maintains the value of VR (UX).
5. The RLC entity receives the fifth data packet with the SN of 604, and since SN = VR (UH), the RLC entity puts the data packet with the SN of 604 into the buffer, sets the value of VR (UH) to 605, and the value of VR (UR) to 93, and maintains the value of VR (UX).
6. The RLC entity receives the sixth data packet with the SN of 602, and since VR (UR) < SN < VR (UH), the RLC entity puts the data packet with the SN of 602 into the buffer, and maintains the value of VR (UH), the value of VR (UR), and the value of VR (UX). If T-Reordering expires at this time, then the RLC entity will submit the buffered data packets with the SNs of 599 to 604 to the higher layer, and set the value of VR (UR) to 605; and at this time, VR (UR) = VR (UH), so T-Reordering will not be restarted.

The processing flow of the method above can be performed in software program which can be stored in a storage medium, where the software program performs the steps of the method above upon being invoked.

Based upon the same inventive concept, an embodiment of the invention further provides an RLC entity as illustrated in Fig.4 including:
A setting module 41 is configured to set initial values for a VR (UH) state variable and a VR (UR) state variable of the RLC layer according to the SN of a received first data packet; and
A processing module 42 is configured to process a currently received data packet according to the SN of the currently received data packet, and the current values of the VR (UH) state variable and the VR (UR) state variable configured at the RLC layer, and to update the current values of the VR (UH) state variable and the VR (UR) state variable.

In an implementation, in a first preferred implementation, both of the initial values of the VR (UH) state variable and the VR (UR) state variable are set to the SN of the first data packet.

In this implementation, the setting module 41 is configured to determine the SN of the first data packet, and to set the initial values of the VR (UH) state variable and the VR (UR) state variable to the SN of the first data packet, upon reception of the first data packet.

In this implementation, the processing module 42 configured to process the currently received data packet is further configured:
I. If the SN of the currently received data packet is equal to the current value of the VR (UH) state variable, to submit the currently received data packet to a higher layer, and to update the current values of the VR (UH) state variable and the VR (UR) state variable;
II. If the SN of the currently received data packet is more than the difference between the current value of the VR (UH) state variable, and a preset reordering window size, and less than the current value of the VR (UR) state variable, to discard the currently received data packet, to update the current value of the VR (UH) state variable, and to maintain the current value of the VR (UR) state variable;
   In this approach, if the difference between the current value of the VR (UH) state variable, and the preset reordering window size is less than zero, then the SN of the currently received data packet will be compared with a result of a MOD operation on the difference. Particularly if the length of a serial number is configured as 5 bits, then a MOD-32 operation will be performed on the difference; and if the length of a serial number is configured as 10 bits, then the a MOD-1024 operation will be performed on the difference; and
III. If the SN of the currently received data packet is more than the current value of the VR (UH) state variable, to buffer the currently received data packet, to start a reordering timer (T-Reordering), to update the current value of the VR (UH) state variable, and to maintain the current value of the VR (UR) state variable; and
   While the reordering timer is counting, to buffer the currently received data packet, to update the current value of the VR (UH) state variable, and to maintain the current value of the VR (UR) state variable, until the SN of the data packet is equal to the current value of the VR (UR) state variable, or the reordering timer expires, and to reorder and submit the buffered data packets to the higher layer, to stop the reordering timer, and to update the current values of the VR (UH) state variable and the VR (UR) state variable, where the updated current value of the VR (UH) state variable is the same with the updated current value of the VR (UR) state variable.

In a second preferred implementation, the initial value of the VR (UH) state variable is set to the SN of the first data packet, and the initial value of the VR (UR) state variable is set to the difference between the initial value of the VR (UH) state variable, and a preset reordering window size.

In this implementation, the setting module 41 is configured to determine the SN of the first data packet, and to set the initial value of the VR (UH) state variable to the SN of the first data packet, and the initial value of the VR (UR) state variable to the difference between the initial value of the VR (UH) state variable, and the preset reordering window size, upon reception of the first data packet.

In this implementation, if the difference between the initial value of the VR (UR) state variable, and the preset reordering window size is less than zero, then the setting module 41 will be configured:
To set the initial value of the VR (UR) state variable to a value as a result of a MOD operation on the difference between the initial value of the VR (UR) state variable, and the preset reordering window size.

Particularly if the preconfigured length of an SN is 5 bits, then the setting module 41 will be configured to set the initial value of the VR (UR) state variable to a value as a result of a MOD-32 operation on the difference between the initial value of the VR (UH) state variable, and the preset reordering window size; and
If the preconfigured length of an SN is 10 bits, then the setting module 41 will be configured to set the initial value of the VR (UR) state variable to a value as a result of a MOD-1024 operation on the difference between the initial value of the VR (UH) state variable, and the preset reordering window size.

In this implementation, the processing module 42 is configured to buffer the first data packet, to start the reordering timer, and to update the current values of the VR (UH) state variable and the VR (UR) state variable, upon reception of the first data packet; and
While the reordering timer is counting, to process the currently received data packet according to the SN of the currently received data packet, and the current values of the VR (UH) state variable and the VR (UR) state variable.

Furthermore while the reordering timer is counting, the processing module 42 configured to process the currently received data packet according to the SN of the currently received data packet, and the current values of the VR (UH) state variable and the VR (UR) state variable is configured:
I. If the SN of the currently received data packet is less than the current value of the VR (UR) state variable, to discard the received first data packet, and to update the current values of the VR (UH) state variable and the VR (UR) state variable;
II. If the SN of the currently received data packet is equal to the current value of the VR (UH) state variable, to buffer the currently received data packet, and to update the current values of the VR (UH) state variable and the VR (UR) state variable;
III. If the SN of the currently received data packet is more than the current value of the VR (UR) state variable, and less than the current value of the VR (UH) state variable, to buffer the currently received data packet, to update the current value of the VR (UH) state variable, and to maintain the current value of the VR (UR) state variable; and
IV. If the SN of the currently received data packet is equal to the VR (UR) state variable, to buffer the currently received data packet, to stop the reordering timer, to reorder and submit the buffered data packets to the higher layer, to update the current value of the VR (UH) state variable, and to set the current value of the VR (UR) state variable the same with the current value of the VR (UH) state variable; and to further processes subsequently received data packets as in the first approach.

In this implementation, the processing module 42 is further configured, if the reordering timer expires, to stop the reordering timer, to reorder and submit the buffered data packets to the higher layer, to update the current value of the VR (UH) state variable, and to set the current value of the VR (UR) state variable the same with the current value of the VR (UH) state variable.

A structure of and processing by an RLC entity according to an embodiment of the invention will be described below in connection with a preferred hardware structure thereof.

Referring to Fig.5, the RLC entity includes a transceiver 51, and at least one processor 52 connected with the transceiver 51, where:
The transceiver 51 is configured to receive data packets transmitted by a transmitter, and to submit the data packets processed by the processor 52 to a higher layer; and
The processor 52 is configured to set initial values for a VR (UH) state variable and a VR (UR) state variable of the RLC layer according to the SN of a received first data packet; and to process a currently received data packet according to the SN of the currently received data packet, and the current values of the VR (UH) state variable and the VR (UR) state variable configured at the RLC layer, and to update the current values of the VR (UH) state variable and the VR (UR) state variable.

In an implementation, in a first preferred implementation, both of the initial values of the VR (UH) state variable and the VR (UR) state variable are set to the SN of the first data packet.

In this implementation, the processor 52 is configured to set the initial values of the VR (UH) state variable and the VR (UR) state variable to the SN of the first data packet, after the transceiver 51 receives the first data packet.

In this implementation, the processor 52 configured to process the currently received data packet is further configured:
I. If the SN of the data packet currently received by the transceiver 51 is equal to the current value of the VR (UH) state variable, to submit the currently received data packet to a higher layer, and to update the current values of the VR (UH) state variable and the VR (UR) state variable;
II. If the SN of the data packet currently received by the transceiver 51 is more than the difference between the current value of the VR (UH) state variable, and a preset reordering window size, and less than the current value of the VR (UR) state variable, to discard the currently received data packet, to update the current value of the VR (UH) state variable, and to maintain the current value of the VR (UR) state variable;
   In this approach, if the difference between the current value of the VR (UH) state variable, and the preset reordering window size is less than zero, then the SN of the currently received data packet will be compared with a result of a MOD operation on the difference. Particularly if the length of a serial number is configured as 5 bits, then a MOD-32 operation will be performed on the difference; and if the length of a serial number is configured as 10 bits, then the a MOD-1024 operation will be performed on the difference; and
III. If the SN of the data packet currently received by the transceiver 51 is more than the current value of the VR (UH) state variable, to buffer the currently received data packet, to start a reordering timer, to update the current value of the VR (UH) state variable, and to maintain the current value of the VR (UR) state variable; and
   While the reordering timer is counting, to buffer the currently received data packet, to update the current value of the VR (UH) state variable, and to maintain the current value of the VR (UR) state variable, until the SN of the data packet is equal to the current value of the VR (UR) state variable, or the reordering timer expires, and to reorder and submit the buffered data packets to the higher layer, to stop the reordering timer, and to update the current values of the VR (UH) state variable and the VR (UR) state variable, where the updated current value of the VR (UH) state variable is the same with the updated current value of the VR (UR) state variable.

In a second preferred implementation, the initial value of the VR (UH) state variable is set to the SN of the first data packet, and the initial value of the VR (UR) state variable is set to the difference between the initial value of the VR (UH) state variable, and a preset reordering window size.

In this implementation, the processor 52 is configured to set the initial value of the VR (UH) state variable to the SN of the first data packet, and the initial value of the VR (UR) state variable to the difference between the initial value of the VR (UH) state variable, and the preset reordering window size, after the transceiver 51 receives the first data packet.

In this implementation, if the difference between the initial value of the VR (UR) state variable, and the preset reordering window size is less than zero, then the processor 52 will be configured:
To set the initial value of the VR (UR) state variable to a value as a result of a MOD operation on the difference between the initial value of the VR (UR) state variable, and the preset reordering window size.

Particularly if the preconfigured length of an SN is 5 bits, then the processor 52 will be configured to set the initial value of the VR (UR) state variable to a value as a result of a MOD-32 operation on the difference between the initial value of the VR (UR) state variable, and the preset reordering window size; and
If the preconfigured length of an SN is 10 bits, then the processor 52 will be configured to set the initial value of the VR (UR) state variable to a value as a result of a MOD-1024 operation on the difference between the initial value of the VR (UR) state variable, and the preset reordering window size.

In this implementation, the processor 52 is configured to buffer the first data packet, to start the reordering timer, and to update the current values of the VR (UH) state variable and the VR (UR) state variable, upon reception of the first data packet; and
While the reordering timer is counting, to process the currently received data packet according to the SN of the currently received data packet, and the current values of the VR (UH) state variable and the VR (UR) state variable.

Furthermore while the reordering timer is counting, the processor 52 configured to process the currently received data packet according to the SN of the currently received data packet, and the current values of the VR (UH) state variable and the VR (UR) state variable is configured:
I. If the SN of the data packet currently received by the transceiver 51 is less than the current value of the VR (UR) state variable, to discard the received first data packet, and to update the current values of the VR (UH) state variable and the VR (UR) state variable;
II. If the SN of the data packet currently received by the transceiver 51 is equal to the current value of the VR (UH) state variable, to buffer the currently received data packet, and to update the current values of the VR (UH) state variable and the VR (UR) state variable;
III. If the SN of the data packet currently received by the transceiver 51 is more than the current value of the VR (UR) state variable, and less than the current value of the VR (UH) state variable, to buffer the currently received data packet, to update the current value of the VR (UH) state variable, and to maintain the current value of the VR (UR) state variable; and
IV. If the SN of the data packet currently received by the transceiver 51 is equal to the VR (UR) state variable, to buffer the currently received data packet, to stop the reordering timer, to reorder and submit the buffered data packets to the higher layer, to update the current value of the VR (UH) state variable, and to set the current value of the VR (UR) state variable the same with the current value of the VR (UH) state variable; and to further processes subsequently received data packets as in the first approach.

In this implementation, the processor 52 is further configured, if the reordering timer expires, o stop the reordering timer, to reorder and submit the buffered data packets to the higher layer, to update the current value of the VR (UH) state variable, and to set the current value of the VR (UR) state variable the same with the current value of the VR (UH) state variable.

Those skilled in the art shall appreciate that the embodiments of the invention can be embodied as a method, a system or a computer program product. Therefore the invention can be embodied in the form of an all-hardware embodiment, an all-software embodiment or an embodiment of software and hardware in combination. Furthermore the invention can be embodied in the form of a computer program product embodied in one or more computer useable storage mediums (including but not limited to a disk memory, a CD-ROM, an optical memory, etc.) in which computer useable program codes are contained.

The invention has been described in a flow chart and/or a block diagram of the method, the device (system) and the computer program product according to the embodiments of the invention. It shall be appreciated that respective flows and/or blocks in the flow chart and/or the block diagram and combinations of the flows and/or the blocks in the flow chart and/or the block diagram can be embodied in computer program instructions. These computer program instructions can be loaded onto a general-purpose computer, a specific-purpose computer, an embedded processor or a processor of another programmable data processing device to produce a machine so that the instructions executed on the computer or the processor of the other programmable data processing device create means for performing the functions specified in the flow(s) of the flow chart and/or the block(s) of the block diagram.

These computer program instructions can also be stored into a computer readable memory capable of directing the computer or the other programmable data processing device to operate in a specific manner so that the instructions stored in the computer readable memory create an article of manufacture including instruction means which perform the functions specified in the flow(s) of the flow chart and/or the block(s) of the block diagram.

These computer program instructions can also be loaded onto the computer or the other programmable data processing device so that a series of operational steps are performed on the computer or the other programmable data processing device to create a computer implemented process so that the instructions executed on the computer or the other programmable device provide steps for performing the functions specified in the flow(s) of the flow chart and/or the block(s) of the block diagram.

Although the preferred embodiments of the invention have been described, those skilled in the art benefiting from the underlying inventive concept can make additional modifications and variations to these embodiments. Therefore the appended claims are intended to be construed as encompassing the preferred embodiments and all the modifications and variations coming into the scope of the invention.

Evidently those skilled in the art can make various modifications and variations to the invention without departing from the scope of the invention. Thus the invention is also intended to encompass these modifications and variations thereto so long as the modifications and variations come into the scope of the claims appended to the invention.

## Claims

1. A method for processing a data packet at the RLC layer, **characterized in that**, the method comprises:
setting, by an RLC entity, initial values for a VR (UH) state variable and a VR (UR) state variable of the RLC layer according to the SN of a received first data packet; and
processing, by the RLC entity, a currently received data packet according to the SN of the currently received data packet, and the current values of the VR (UH) state variable and the VR (UR) state variable, and updating the current values of the VR (UH) state variable and the VR (UR) state variable.

2. The method according to claim 1, wherein setting, by the RLC entity, the initial values for the VR (UH) state variable and the VR (UR) state variable of the RLC layer according to the SN of the received first data packet comprises:
determining, by the RLC entity, the SN of the first data packet, and setting the initial values of the VR (UH) state variable and the VR (UR) state variable to the SN of the first data packet, upon reception of the first data packet.

3. The method according to claim 1, wherein setting, by the RLC entity, the initial values for the VR (UH) state variable and the VR (UR) state variable of the RLC layer according to the SN of the received first data packet comprises:
determining, by the RLC entity, the SN of the first data packet, and setting the initial value of the VR (UH) state variable to the SN of the first data packet, and the initial value of the VR (UR) state variable to the difference between the initial value of the VR (UH) state variable, and a preset reordering window size, upon reception of the first data packet.

4. The method according to claim 3, wherein if the difference between the initial value of the VR (UH) state variable, and the preset reordering window size is less than zero, then setting, by the RLC entity, the initial value for the VR (UR) state variable comprises:
setting, by the RLC entity, the initial value of the VR (UR) state variable to a value as a result of a MOD operation on the difference between the initial value of the VR (UH) state variable, and the preset reordering window size.

5. The method according to claim 4, wherein if the preconfigured length of an SN is 5 bits, then the RLC entity will set the initial value of the VR (UR) state variable to a value as a result of a MOD-32 operation on the difference between the initial value of the VR (UH) state variable, and the preset reordering window size; and
if the preconfigured length of an SN is 10 bits, then the RLC entity will set the initial value of the VR (UR) state variable to a value as a result of a MOD-1024 operation on the difference between the initial value of the VR (UH) state variable, and the preset reordering window size.

6. An RLC entity, **characterized in that**, the RLC entity comprises:
a setting module configured to set initial values for a VR (UH) state variable and a VR (UR) state variable of the RLC layer according to the SN of a received first data packet; and
a processing module configured to process a currently received data packet according to the SN of the currently received data packet, and the current values of the VR (UH) state variable and the VR (UR) state variable configured at the RLC layer, and to update the current values of the VR (UH) state variable and the VR (UR) state variable.

7. The RLC entity according to claim 6, wherein the setting module is configured:
to determine the SN of the first data packet, and to set the initial values of the VR (UH) state variable and the VR (UR) state variable to the SN of the first data packet, upon reception of the first data packet.

8. The RLC entity according to claim 6, wherein the setting module is configured:
to determine the SN of the first data packet, and to set the initial value of the VR (UH) state variable to the SN of the first data packet, and the initial value of the VR (UR) state variable to the difference between the initial value of the VR (UH) state variable, and the preset reordering window size, upon reception of the first data packet.

9. The RLC entity according to claim 8, wherein if the difference between the initial value of the VR (UH) state variable, and the preset reordering window size is less than zero, then the setting module configured to set the initial value for the VR (UR) state variable is configured:
to set the initial value of the VR (UR) state variable to a value as a result of a MOD operation on the difference between the initial value of the VR (UH) state variable, and the preset reordering window size.

10. The RLC entity according to claim 9, wherein if the preconfigured length of an SN is 5 bits, then the setting module is configured to set the initial value of the VR (UR) state variable to a value as a result of a MOD-32 operation on the difference between the initial value of the VR (UH) state variable, and the preset reordering window size; and
if the preconfigured length of an SN is 10 bits, then the setting module is configured to set the initial value of the VR (UR) state variable to a value as a result of a MOD-1024 operation on the difference between the initial value of the VR (UH) state variable, and the preset reordering window size.

## Patentansprüche

1. Verfahren zur Verarbeitung eines Datenpakets in der RLC-Schicht, **dadurch gekennzeichnet, dass** das Verfahren umfasst:
Einstellen, durch eine RLC-Einheit, von Anfangswerten für eine VR(UH)-Zustandsvariable und eine VR(UR)-Zustandsvariable der RLC-Schicht gemäß der SN eines empfangenen ersten Datenpakets; und
Verarbeiten, durch die RLC-Einheit, eines aktuell empfangenen Datenpakets gemäß der SN des aktuell empfangenen Datenpakets und der aktuellen Werte der VR(UH)-Zustandsvariablen und der VR(UR)-Zustandsvariablen und Aktualisieren der aktuellen Werte der VR(UH)-Zustandsvariablen und der VR(UR)-Zustandsvariablen.

2. Verfahren nach Anspruch 1, wobei das Einstellen, durch die RLC-Einheit, der Anfangswerte für die VR(UH)-Zustandsvariable und die VR(UR)-Zustandsvariable der RLC-Schicht gemäß der SN des empfangenen ersten Datenpakets umfasst:
Bestimmen, durch die RLC-Einheit, der SN des ersten Datenpakets und Einstellen der Anfangswerte der VR(UH)-Zustandsvariablen und der VR(UR)-Zustandsvariablen auf die SN des ersten Datenpakets nach Empfang des ersten Datenpakets.

3. Verfahren nach Anspruch 1, wobei das Einstellen, durch die RLC-Einheit, der Anfangswerte für die VR(UH)-Zustandsvariable und die VR(UR)-Zustandsvariable der RLC-Schicht gemäß der SN des empfangenen ersten Datenpakets umfasst:
Bestimmen, durch die RLC-Einheit, der SN des ersten Datenpakets und Einstellen des Anfangswerts der VR(UH)-Zustandsvariablen auf die SN des ersten Datenpakets und des Anfangswerts der VR(UR)-Zustandsvariablen auf die Differenz zwischen dem Anfangswert der VR(UH)-Zustandsvariablen und einer voreingestellten Neuordnungsfenstergröße nach Empfang des ersten Datenpakets.

4. Verfahren nach Anspruch 3, wobei, wenn die Differenz zwischen dem Anfangswert der VR(UH)-Zustandsvariablen und der voreingestellten Neuordnungsfenstergröße kleiner als null ist, das Einstellen, durch die RLC-Einheit, des Anfangswerts für die VR(UR)-Zustandsvariable dann umfasst:
Einstellen, durch die RLC-Einheit, des Anfangswerts der VR(UR)-Zustandsvariablen auf einen Wert als Ergebnis einer MOD-Berechnung der Differenz zwischen dem Anfangswert der VR(UH)-Zustandsvariablen und der voreingestellten Neuordnungsfenstergröße.

5. Verfahren nach Anspruch 4, wobei, wenn die vorkonfigurierte Länge einer SN 5 Bits beträgt, die RLC-Einheit dann den Anfangswert der VR(UR)-Zustandsvariablen auf einen Wert als Ergebnis einer MOD-32-Berechnung der Differenz zwischen dem Anfangswert der VR(UH)-Zustandsvariablen und der voreingestellten Neuordnungsfenstergröße einstellt; und
wenn die vorkonfigurierte Länge einer SN 10 Bits beträgt, die RLC-Einheit dann den Anfangswert der VR(UR)-Zustandsvariablen auf einen Wert als Ergebnis einer MOD-1024-Berechnung der Differenz zwischen dem Anfangswert der VR(UH)-Zustandsvariablen und der voreingestellten Neuordnungsfenstergröße einstellt.

6. RLC-Einheit, **dadurch gekennzeichnet, dass** die RLC-Einheit umfasst:
ein Einstellungsmodul, das konfiguriert ist, um Anfangswerte für eine VR(UH)-Zustandsvariable und eine VR(UR)-Zustandsvariable der RLC-Schicht gemäß der SN eines empfangenen ersten Datenpakets einzustellen; und
ein Verarbeitungsmodul, das konfiguriert ist, um ein aktuell empfangenes Datenpaket gemäß der SN des aktuell empfangenen Datenpakets und der aktuellen Werte der VR(UH)-Zustandsvariablen und der VR(UR)-Zustandsvariablen zu verarbeiten und die aktuellen Werte der VR(UH)-Zustandsvariablen und der VR(UR)-Zustandsvariablen zu aktualisieren.

7. RLC-Einheit nach Anspruch 6, wobei das Einstellungsmodul konfiguriert ist:
um die SN des ersten Datenpakets zu bestimmen und die Anfangswerte der VR(UH)-Zustandsvariablen und der VR(UR)-Zustandsvariablen auf die SN des ersten Datenpakets nach Empfang des ersten Datenpakets einzustellen.

8. RLC-Einheit nach Anspruch 6, wobei das Einstellungsmodul konfiguriert ist:
um den SN des ersten Datenpakets zu bestimmen und den Anfangswert der VR(UH)-Zustandsvariablen auf die SN des ersten Datenpakets und den Anfangswert der VR(UR)-Zustandsvariablen auf die Differenz zwischen dem Anfangswert der VR(UH)-Zustandsvariablen und der voreingestellten Neuordnungsfenstergröße nach Empfang des ersten Datenpakets einzustellen.

9. RLC-Einheit nach Anspruch 8, wobei, wenn die Differenz zwischen dem Anfangswert der VR(UH)-Zustandsvariablen und der voreingestellten Neuordnungsfenstergröße kleiner als null ist, das Einstellungsmodul, das konfiguriert ist, um den Anfangswert für die VR(UR)-Zustandsvariable einzustellen, dann konfiguriert ist:
um den Anfangswert der VR(UR)-Zustandsvariablen auf einen Wert als Ergebnis einer MOD-Berechnung der Differenz zwischen dem Anfangswert der VR(UH)-Zustandsvariablen und der voreingestellten Neuordnungsfenstergröße einzustellen.

10. RLC-Einheit nach Anspruch 9, wobei, wenn die vorkonfigurierte Länge einer SN 5 Bits beträgt, das Einstellungsmodul dann konfiguriert ist, um den Anfangswert der VR(UR)-Zustandsvariablen auf einen Wert als Ergebnis aus einer MOD-32-Berechnung der Differenz zwischen dem Anfangswert der VR(UH)-Zustandsvariablen und der voreingestellten Neuordnungsfenstergröße einzustellen; und
wenn die vorkonfigurierte Länge einer SN 10 Bits beträgt, das Einstellungsmodul dann konfiguriert ist, um den Anfangswert der VR(UR)-Zustandsvariablen auf einen Wert als Ergebnis aus einer MOD-1024-Berechnung der Differenz zwischen dem Anfangswert der VR(UH)-Zustandsvariablen und der voreingestellten Neuordnungsfenstergröße einzustellen.

## Revendications

1. Procédé pour traiter un paquet de données au niveau de la couche RLC, **caractérisé en ce que** le procédé consiste :
à fixer, au moyen d'une entité RLC, des valeurs initiales pour une variable d'état VR (UH) et une variable d'état VR (UR) de la couche RLC en fonction du numéro de série (SN) d'un premier paquet de données reçu ; et
à traiter, au moyen de l'entité RLC, un paquet de données reçu à présent en fonction du numéro de série du paquet de données reçu à présent, ainsi que les valeurs actuelles de la variable d'état VR (UH) et de la variable d'état VR (UR) et à mettre à jour les valeurs actuelles de la variable d'état VR (UH) et de la variable d'état VR (UR).

2. Procédé selon la revendication 1, dans lequel la fixation, au moyen de l'entité RLC, des valeurs initiales pour la variable d'état VR (UH) et la variable d'état VR (UR) de la couche RLC en fonction du numéro de série du premier paquet de données reçu consiste :
à déterminer, au moyen de l'entité RLC, le numéro de série du premier paquet de données et à fixer les valeurs initiales de la variable d'état VR (UH) et de la variable d'état VR (UR) au numéro de série du premier paquet de données, lors de la réception du premier paquet de données.

3. Procédé selon la revendication 1, dans lequel la fixation, au moyen de l'entité RLC, des valeurs initiales pour la variable d'état VR (UH) et la variable d'état VR (UR) de la couche RLC en fonction du numéro de série du premier paquet de données reçu consiste :
à déterminer, au moyen de l'entité RLC, le numéro de série du premier paquet de données et à fixer la valeur initiale de la variable d'état VR (UH) au numéro de série du premier paquet de données et la valeur initiale de la variable d'état VR (UR) à la différence entre la valeur initiale de la variable d'état VR (UH) et une taille de fenêtre de réordonnancement prédéfinie, lors de la réception du premier paquet de données.

4. Procédé selon la revendication 3, dans lequel, si la différence entre la valeur initiale de la variable d'état VR (UH) et la taille de fenêtre de réordonnancement prédéfinie est inférieure à zéro, alors la fixation, au moyen de l'entité RLC, de la valeur initiale pour la variable d'état VR (UR) consiste :
à fixer, au moyen de l'entité RLC, la valeur initiale de la variable d'état VR (UR) à une valeur à la suite d'une opération MOD sur la différence entre la valeur initiale de la variable d'état VR (UH) et la taille de fenêtre de réordonnancement prédéfinie.

5. Procédé selon la revendication 4, dans lequel, si la longueur préconfigurée d'un numéro de série est de 5 bits, alors l'entité RLC fixera la valeur initiale de la variable d'état VR (UR) à une valeur à la suite d'une opération MOD-32 sur la différence entre la valeur initiale de la variable d'état VR (UH) et la taille de fenêtre de réordonnancement prédéfinie ; et
si la longueur préconfigurée d'un numéro de série est de 10 bits, alors l'entité RLC fixera la valeur initiale de la variable d'état VR (UR) à une valeur à la suite d'une opération MOD-1024 sur la différence entre la valeur initiale de la variable d'état VR (UH) et la taille de fenêtre de réordonnancement prédéfinie.

6. Entité RLC, **caractérisée en ce que** l'entité RLC comprend :
un module de réglage configuré pour fixer des valeurs initiales pour une variable d'état VR (UH) et une variable d'état VR (UR) de la couche RLC en fonction du numéro de série d'un premier paquet de données reçu ; et
un module de traitement configuré pour traiter un paquet de données reçu à présent en fonction du numéro de série du paquet de données reçu à présent, ainsi que les valeurs actuelles de la variable d'état VR (UH) et de la variable d'état VR (UR) configurées au niveau de la couche RLC et pour mettre à jour les valeurs actuelles de la variable d'état VR (UH) et de la variable d'état VR (UR).

7. Entité RLC selon la revendication 6, dans laquelle le module de réglage est configuré :
pour déterminer le numéro de série du premier paquet de données et pour fixer les valeurs initiales de la variable d'état VR (UH) et de la variable d'état VR (UR) au numéro de série du premier paquet de données, lors de la réception du premier paquet de données.

8. Entité RLC selon la revendication 6, dans laquelle le module de réglage est configuré :
pour déterminer le numéro de série du premier paquet de données et pour fixer la valeur initiale de la variable d'état VR (UH) au numéro de série du premier paquet de données et la valeur initiale de la variable d'état VR (UR) à la différence entre la valeur initiale de la variable d'état VR (UH) et la taille de fenêtre de réordonnancement prédéfinie, lors de la réception du premier paquet de données.

9. Entité RLC selon la revendication 8, dans laquelle, si la différence entre la valeur initiale de la variable d'état VR (UH) et la taille de fenêtre de réordonnancement prédéfinie est inférieure à zéro, alors le module de réglage configuré pour fixer la valeur initiale pour la variable d'état VR (UR) est configuré :
pour fixer la valeur initiale de la variable d'état VR (UR) à une valeur à la suite d'une opération MOD sur la différence entre la valeur initiale de la variable d'état VR (UH) et la taille de fenêtre de réordonnancement prédéfinie.

10. Entité RLC selon la revendication 9, dans laquelle, si la longueur préconfigurée d'un numéro de série est de 5 bits, alors le module de réglage est configuré pour fixer la valeur initiale de la variable d'état VR (UR) à une valeur à la suite d'une opération MOD-32 sur la différence entre la valeur initiale de la variable d'état VR (UH) et la taille de fenêtre de réordonnancement prédéfinie ; et
si la longueur préconfigurée d'un numéro de série est de 10 bits, alors le module de réglage est configuré pour fixer la valeur initiale de la variable d'état VR (UR) à une valeur à la suite d'une opération MOD-1024 sur la différence entre la valeur initiale de la variable d'état VR (UH) et la taille de fenêtre de réordonnancement prédéfinie.
